# DEMANDE DE BREVET EUROPEEN

(11) **EP 0 733 596 A1**
(43) Date de publication de la demande: **25.09.1996**
(21) Numéro de dépôt: 96400574.8
(22) Date de dépôt: 19.03.1996
(51) Int. Cl.: C02F 11/12, B01J 20/26

(54) **Perfectionnements apportés à la déshydration des boues**

(30) Priorité: 20.03.1995 FR 9503215
(71) Demandeur: DEGREMONT, F-92508 Rueil-Malmaison Cédex (FR)
(72) Inventeur: Prevot, claude, 78700 Conflans Saint Honorine (FR); Sauveur, Jean Candau, 67000 Strasbourg (FR); Boltenhagen, Philippe, 67190 Mutzig (FR)
(74) Mandataire: Armengaud Ainé, Alain

(57) **Abrégé**

Procédé de déshydratation des boues provenant du traitement d'eaux résiduaires ou de production d'eau potable ou industrielle notamment en vue de leur valorisation caractérisé en ce que la boue liquide, ayant subi une déshydratation mécanique à l'aide de moyens classiques, est mise au contact d'un produit absorbeur d'eau choisi parmi les macromolécules à longue chaîne obtenues par association de monomères synthétiques et en ce que, après cette étape de post déshydratation, on sépare la boue séchée dudit produit absorbeur d'eau, ce dernier étant ensuite traité pour en éliminer l'eau, notamment en vue d'un recyclage dans l'étape de post déshydratation.

## Description

La présente invention est relative à un procédé de déshydratation des boues provenant des différentes opérations de traitement d'eaux résiduaires ou de production d'eau potable ou industrielle.

On sait que ces boues doivent être évacuées des stations de traitement sous des formes permettant soit une valorisation agricole, soit une mise en décharge contrôlée, soit encore une incinération.

A l'heure actuelle, les lignes de traitement des boues de telles stations de traitement sont conçues selon un schéma classique comprenant tout ou partie des étapes suivantes :
- récupération des boues en divers points de la station,
- épaississement de ces boues soit seules, soit en mélange (centralisation);
- stabilisation éventuelle par voie chimique ou biologique (digestion anaérobie, digestion aérobie, chaulage, etc) ;
- déshydratation mécanique des boue, notamment en utilisant des filtres à bande, des centrifugeuses, des filtres presse, etc ;
- post-traitements tels que notamment chaulage, compostage, séchage, déshydratation sous haute pression, etc;
- éventuellement stockage sur site.

Les étapes d'épaississement et de déshydratation requièrent généralement un conditionnement spécifique des boues permettant une coagulation et une floculation de la matière sèche contenue dans ces boues. Ceci entraîne une amélioration de la filtrabilité globale rendant aisée la séparation de la matière sèche et de l'eau interstitielle.

La présente invention se propose d'apporter un procédé perfectionné de déshydratation des boues permettant d'obtenir un degré de siccité très supérieur à celui réalisé par la mise en oeuvre des procédés classiques. L'invention entend notamment apporter une solution aux problèmes ci-après:
- limitation des dépenses énergétiques en matière de déshydratation des boues;
- diminution de la quantité de réactifs consommée;
- diminution des coûts d'investissement des ateliers de traitement.

L'idée inventive consiste à remplacer des moyens mécaniques utilisés, dans l'état antérieur de la technique, pour réaliser la déshydratation des boues, et qui excerçaient des pressions effectives de l'ordre de 10⁵ Pa à 1,5.10⁶ Pa sur la boue, par des moyens mettant en oeuvre des forces osmotiques et électrochimiques, pouvant vaincre notamment les forces de liaisons eau/matières (forces de capillarité par exemple), en exerçant des pressions de l'ordre de 10⁷Pa.

En conséquence, l'invention concerne un procédé de déshydratation des boues provenant du traitement d'eaux résiduaires ou de production d'eau potable ou industrielle notamment en vue de leur valorisation caractérisé en ce que la boue liquide, ayant subi une déshydratation mécanique à l'aide de moyens classiques, est mise au contact d'un produit absorbeur d'eau choisi parmi les macromolécules à longue chaîne obtenues par association de monomères synthétiques et en ce que, après cette étape de post déshydratation, on sépare la boue séchée dudit produit absorbeur d'eau, ce dernier étant ensuite traité pour en éliminer l'eau, notamment en vue d'un recyclage dans l'étape de post déshydratation.

Selon un mode de mise en oeuvre de l'invention, ledit produit absorbeur d'eau est un polymère linéaire ou branché.

Selon un autre mode de mise en oeuvre, le produit absorbeur d'eau est choisi parmi les polymères anioniques notamment des copolymères de l'acrylamide et de l'acide acrylique ou des polymères d'acide acrylique.

Selon l'invention, le produit absorbeur d'eau est choisi parmi les polymères neutres, essentiellement des polyacrylamides.

Selon encore une autre caractéristique de l'invention, le produit absorbeur d'eau est choisi parmi les polymères cationiques notamment des copolymères d'acrylamide et d'un monomère cationique, plus particulièrement le méthacrylate de diméthylamino-ethyle ou l'acrylate de diméthylamino-ethyle.

Selon l'invention, le produit absorbeur d'eau peut être un réticulat obtenu par polymérisation, ou par dispersion inverse ou. par broyage de gels de matériaux super absorbants.

Selon l'invention, ledit produit absorbeur d'eau peut être utilisé sous forme pulvérulente ou sous la forme de fibres.

Selon un autre mode de mise en oeuvre du procédé selon l'invention, ledit produit absorbeur d'eau est un polyélectrolyte utilisé pour la floculation des boues avant déshydratation, ledit polyélectrolyte, après absorption de l'eau, lors de l'étape de post déshydratation étant recyclé en amont de l'étape de déshydratation pour floculer la boue. De préférence, la quantité de polyélectrolyte utilisée lors de l'étape de post déshydratation est choisie de manière à être pratiquement identique à celle nécessaire pour effectuer la floculation de la même quantité de boue, avant l'étape de déshydratation.

Selon l'invention, ledit produit absorbeur d'eau est mis en oeuvre de préférence, en interposant entre la boue et ledit produit, un milieu poreux de très faible épaisseur et dont les dimensions des pores sont choisies suffisamment petites pour éviter aux particules dudit produit de pénétrer dans la boue. Ledit milieu poreux peut être, par exemple, une membrane de dialyse ou un papier filtre ou un tamis. En cas d'utilisation de produit absorbeur d'eau sous forme de fibres, il est possible de mettre celles-ci en contact direct avec la boue sans devoir intercaler de milieu poreux intermédiaire.

Ainsi qu'on le comprend, le procédé objet de l'invention se distingue notamment de l'état antérieur de la technique par la mise en oeuvre d'une étape de post-déshydratation au cours de laquelle on utilise des produits spécifiques, définis ci-dessus, ayant la particularité de pouvoir absorber de l'eau ou de l'eau et des matières dissoutes.

D'autres caractéristiques et avantages de la présente invention ressortiront de la description faite ci-après, en référence au dessin annexé qui en illustre, à titre d'exemple non limitatif, deux modes de mise en oeuvre préférés.

Sur le dessin :
- La figure 1 est un schéma sous forme de diagramme illustrant les étapes du premier mode de mise en oeuvre et,
- La figure 2 est un schéma similaire illustrant les étapes du second mode de mise en oeuvre.

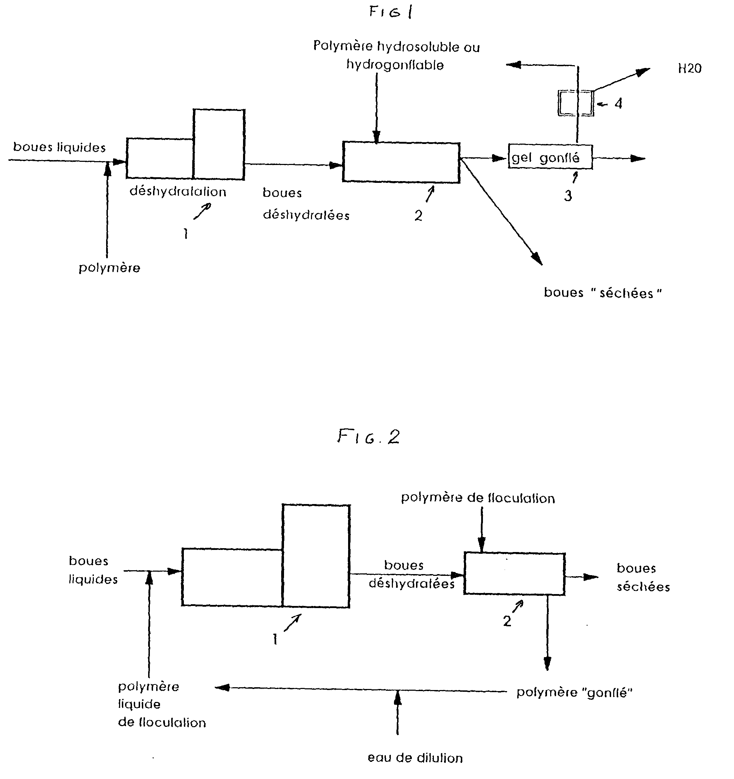

En se référant à la figure 1, on voit que les boues liquides provenant d'étapes préalables de traitement de l'eau, sont floculées à l'aide d'un polyélectrolyte adapté et le mélange obtenu alimente un dispositif classique de déshydratation mécanique désigné dans son ensemble par la référence 1. Ce dispositif peut être par exemple, un filtre à bandes, une centrifugeuse, un filtre presse ou toute machine équivalente. Au cours de cette première étape, les boues sont déshydratées partiellement et, suivant le type de boues et de dispositifs mécaniques de déshydratation utilisés, le taux de matières sèches des boues (c'est-à-dire la siccité) peut varier de 15 à 40% en moyenne.

Les boues ainsi déshydratées sont ensuite mises au contact du produit absorbeur d'eau, tel que défini ci-dessus. Au cours de cette étape de post-déshydratation 2, on réalise un contact efficace entre les boues et le produit absorbeur de manière que l'eau encore contenue dans les boues soit absorbée par le produit, augmentant ainsi la siccité finale. Les essais auxquels la demanderesse s'est livrée ont permis de faire passer la siccité de 17 à plus de 60% sur une boue d'aération prolongée.

Afin de faciliter la récupération du produit absorbeur d'eau, après cette étape de post-déshydratation 2, l'invention prévoit de préférence d'interposer entre les boues à déshydrater et ledit produit absorbeur d'eau, un milieu poreux de très faible épaisseur et présentant des pores de dimensions suffisamment petites afin d'éviter aux particules de produits absorbants (qui peuvent se présenter sous la forme de poudre ou de fibres) de pénétrer dans les boues lors de l'étape de post-déshydratation. Selon l'invention, ce milieu poreux peut être par exemple, une membrane de dialyse, un papier filtre, un simple tamis et tout moyen équivalent.

Après l'étape 2 de post-déshydratation, on réalise selon l'invention une séparation entre la boue post-déshydratée et le produit absorbeur d'eau gonflé 3. A l'issue de cette séparation, ce produit peut être soit recyclé en tête de station, soit évacué en dehors de la station en vue par exemple d'une valorisation agricole, soit être traité dans une installation 4 afin d'y subir un traitement de « dégonflement », permettant de récupérer d'une part, le produit absorbeur initial qui peut être recyclé en amont de l'étape 2 en vue de réaliser la post-déshydratation, ce qui diminue d'autant les coûts de revient et d'autre part, l'eau qui est renvoyée en tête de la station.

On a donné ci-après les résultats relatifs à deux exemples de mise en oeuvre du procédé tel que défini ci-dessus pour un produit absorbeur d'eau à base de polyacrylate d'une part, sous forme pulvérulente et d'autre part, sous forme d'une membrane plane d'épaisseur contrôlée (film de gel dit monolitique). La boue traitée lors de ces essais était une boue urbaine provenant d'un traitement par aération prolongée. Il est bien évident que ces exemples n'ont aucun caractère limitatif.

| Absorbeur | Siccité de départ de la boue (%) | Siccités finales (%) | | |
|---|---|---|---|---|
| | | Après 2h30 | Après 12 h. | Après 24 h |
| Poudre | 16 | 45 | 63 | 70 |
| Membrane | 16 | 30 | 45 | 63 |

Dans le second mode de mise en oeuvre de l'invention, illustré par la figure 2, on utilise le pouvoir d'absortion d'eau des polyélectrolytes qui sont employés lors de la floculation des boues, avant leur déshydratation.

Selon ce second mode de mise en oeuvre, les boues déshydratées mécaniquement dans l'étape 1 (par exemple, à l'aide d'un filtre à bandes, d'une centrifugeuse, ou d'un filtre-presse) sont mises au contact du polyélectrolyte en poudre lors de l'étape de post-déshydratation 2. Au cours de cette étape 2, le polyélectrolyte absorbe une partie de l'eau résiduelle contenue dans les boues et il se gonfle d'eau. A la sortie de cette étape 2, on réalise selon l'invention, une séparation entre les boues post-déshydratées et le polyélectrolyte gonflé. Celui-ci est recyclé en amont de l'étape de déshydratation mécanique 1 afin de réaliser la floculation des boues. Selon l'invention, en vue d'optimiser le processus de déshydratation, la quantité de polyélectrolyte utilisée lors de l'étape de post-déshydratation 2, est choisie la plus proche possible de celle nécessaire à la floculation de la même quantité de boues avant l'étape de déshydratation 1.

Comme décrit dans le mode de mise en oeuvre mentionné ci-dessus, pour faciliter la récupération du polyélectrolyte, il est préférable, selon l'invention d'introduire entre les boues et le polyélectrolyte, un milieu poreux de très faible épaisseur et de taille de pores suffisamment petite pour éviter aux grains de polyélectrolyte de pénétrer dans les boues. Comme mentionné ci-dessus, ce milieu poreux peut être par exemple, une membrane de dialyse, un papier filtre, un tamis, ou tout moyen équivalent.

On a donné ci-après, à titre d'exemple non limitatif les résultats relatifs à la mise en oeuvre du procédé de l'invention selon le deuxième exemple de réalisation décrit ci-dessus en référence à la figure 2. Ces résultats se réfèrent à des essais effectués sur une boue urbaine provenant d'un traitement par aération prolongée, le produit absorbeur utilisé étant un polymère cationique ayant une action de floculation sur la boue, ce polymère étant commercialisé sous la dénomination « PROSEDIM CS 285 » par la Firme DEGREMONT.

| Absorbeur | Siccité de départ de la boue (%) | Siccités finales (%) | | |
|---|---|---|---|---|
| | | Après 2h30 | Après 4h30. | Après 24 h |
| Prosedim | | | | |
| CS 285 | 14,3 | 34,5 | 40,9 | 42,2 |

Les résultats résumés ci-dessus des deux modes de mise en oeuvre du procédé de l'invention font clairement ressortir que celui-ci permet d'obtenir des valeurs de siccité bien plus importantes que celles obtenues à l'heure actuelle (de l'ordre de 20% maximum, pour un même type de boue que celui traité lors des essais dont les résultats figurent dans les tableaux ci-dessus, c'est-à-dire une boue urbaine provenant d'un traitement par aération prolongé) avec des procédés de déshydratation mettant en oeuvre des moyens mécaniques classiques.

Par ailleurs, le procédé selon l'invention est facile à mettre en oeuvre, économique étant donné qu'il réduit les dépenses énergétiques, ainsi que les consommations de réactifs.

Il demeure bien entendu que la présente invention n'est pas limitée aux modes de mise en oeuvre décrits et/ou représentés ici, mais qu'elle en englobe toutes les variantes.

## Revendications

1. Procédé de déshydratation des boues provenant du traitement d'eaux résiduaires ou de production d'eau potable ou industrielle notamment en vue de leur valorisation caractérisé en ce que la boue liquide, ayant subi une déshydratation mécanique à l'aide de moyens classiques, est mise au contact d'un produit absorbeur d'eau choisi parmi les macromolécules à longue chaîne obtenues par association de monomères synthétiques et en ce que, après cette étape de post déshydratation, on sépare la boue séchée dudit produit absorbeur d'eau, ce dernier étant ensuite traité pour en éliminer l'eau, notamment en vue d'un recyclage dans l'étape de post déshydratation.

2. Procédé selon la revendication 1 caractérisé en ce que ledit produit absorbeur d'eau est un polyélectrolyte utilisé pour la floculation des boues avant déshydratation, ledit polyélectrolyte, après absorption de l'eau, lors de l'étape de post déshydratation étant recyclé en amont de l'étape de déshydratation pour floculer la boue.

3. Procédé selon la revendication 2 caractérisé en ce que la quantité de polyélectrolyte utilisée lors de l'étape de post déshydratation est choisie de manière à être pratiquement identique à celle nécessaire pour effectuer la floculation de la même quantité de boue, avant l'étape de déshydratation.

4. Procédé selon la revendication 1 caractérisé en ce que ledit produit absorbeur d'eau est un polymère linéaire ou branché.

5. Procédé selon la revendication 1 caractérisé en ce que le produit absorbeur d'eau est choisi parmi les polymères anioniques notamment des copolymères de l'acrylamide et de l'acide acrylique ou des polymères d'acide acrylique.

6. Procédé selon la revendication 1 caractérisé en ce que le produit absorbeur d'eau est choisi parmi les polymères neutres, essentiellement des polyacrylamides.

7. Procédé selon la revendication 1 caractérisé en ce que le produit absorbeur d'eau est choisi parmi les polymères cationiques notamment des copolymères d'acrylamide et d'un monomère cationique, plus particulièrement le méthacrylate de diméthylamino-ethyle ou l'acrylate de diméthylamino-ethyle.

8. Procédé selon la revendication 1 caractérisé en ce que le produit absorbeur d'eau est un réticulat obtenu par polymérisation.

9. Procédé selon la revendication 1 caractérisé en ce que le produit absorbeur d'eau est un réticulat obtenu par dispersion inverse.

10. Procédé selon la revendication 1 caractérisé en ce que le produit absorbeur d'eau est un réticulat obtenu par broyage de gels de matériaux superabsorbants.

11. Procédé selon l'une quelconque des revendications précédentes caractérisé en ce que ledit produit absorbeur d'eau est utilisé sous forme pulvérulente.

12. Procédé selon l'une quelconque des revendications précédentes caractérisé en ce que ledit produit absorbeur d'eau est utilisé sous la forme de fibres.

13. Procédé selon l'une quelconque des revendications précédentes caractérisé en ce que ledit produit absorbeur d'eau est mis en oeuvre en interposant entre la boue et ledit produit, un milieu poreux de très faible épaisseur et dont les dimensions des pores sont choisies suffisamment petites pour éviter aux particules dudit produit de pénétrer dans la boue.

14. Procédé selon la revendication 13 caractérisé en ce que ledit milieu poreux est une membrane de dialyse.

15. Procédé selon la revendication 13 caractérisé en ce que ledit milieu poreux est constitué d'un matériau filtrant notamment un papier filtre ou un tamis.
